(19) Europäisches Patentamt

European Patent Office

Office européen des brevets

(11) **EP 3 792 521 B1**

(12) **EUROPEAN PATENT SPECIFICATION**

(45) Date of publication and mention
of the grant of the patent:
**27.10.2021 Bulletin 2021/43**

(51) Int Cl.:
*F16G 1/28* *(2006.01)*        *F16G 1/14* *(2006.01)*
*F16H 7/02* *(2006.01)*        *F16G 1/16* *(2006.01)*
*F16G 1/10* *(2006.01)*

(21) Application number: **20199257.5**

(22) Date of filing: **25.03.2015**

(54) **TOOTHED BELT**

ZAHNRIEMEN

COURROIE DENTÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2014   JP 2014072464
31.03.2014   JP 2014072467
25.02.2015   JP 2015035113**

(43) Date of publication of application:
**17.03.2021 Bulletin 2021/11**

(62) Document number(s) of the earlier application(s) in
accordance with Art. 76 EPC:
**15774390.7 / 3 128 205**

(73) Proprietor: **Mitsuboshi Belting Ltd.
Kobe-shi, Hyogo 653-0024 (JP)**

(72) Inventors:
• **Shakushiro, Tomoaki
Hyogo, 653-0024 (JP)**
• **Iizuka, Shingo
Hyogo, 653-0024 (JP)**

(74) Representative: **Hoffmann Eitle
Patent- und Rechtsanwälte PartmbB
Arabellastraße 30
81925 München (DE)**

(56) References cited:
**JP-A- 2000 337 444     JP-A- 2002 349 636
JP-A- 2011 133 022**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a toothed belt which is used for OA machines such as printers and other general industrial purposes and enables synchronous power transmission between pulleys.

BACKGROUND ART

Hitherto, high positioning accuracy has been required for driving of a carriage represented by an ink jet printer or for precision driving accompanied by a reciprocating motion of a work such as in an actuator. Therefore, a toothed belt enabling synchronous power transmission has been used. Particularly, in recent years, as for printers, high-quality color printing and commercialization of products that can cope with high-speed processing have rapidly progressed. In addition, for high-precision positioning without the occurrence of printing variation, a reduction in belt speed variation (speed variation) during an engagement period is required.

As a technique for reducing belt speed variation (speed variation), a toothed belt using a glass cord as a tension member and having a tooth pitch of from 0.65 to 0.85 mm is disclosed (Patent Document 1). In Patent Document 1, it is disclosed that as a toothed belt uses a glass cord twisted into a fine cord diameter by using fine glass fibers and has a small tooth pitch, it can achieve the secured dimensional stability, sufficient bending correspondence, and suppression in belt speed variation. Therefore, the toothed belt can be used for a small-diameter pulley and thus a reduction in the motor size can be realized, which contributes to reductions in the size and weight of an apparatus and power saving.

Here, when a pulley is downsized, the number of teeth of the pulley is small, and engagement between the teeth of the toothed belt and the teeth of the pulley is reduced. In this case, the running line (belt pitch line) of the toothed belt easily moves ups and downs when the toothed belt runs between pulleys, and belt speed variation increases. Therefore, the reduction in a tooth pitch which is the distance between the teeth of the toothed belt to increase the engagement between the teeth of the toothed belt and the teeth of the pulleys is required.

Recently, due to a variety of needs, there has been a demand for further reductions in the size and weight of an apparatus and power saving. There is a demand for a toothed belt which can be used for a smaller motor (e.g., a driving motor for a printer carriage).

As described above, due to the demand for reduction in the size of the driving motor and power saving, there may be a case where as the driving motor is used a low-output type one. Here, when a driving pulley is attached to the shaft of the low-output driving motor, a toothed belt is wound around the driving pulley and a driven pulley and a belt attachment tension (axial load, tension) is set high, the initial torque of the driving motor increases or the axial load increases, which causes problems when the low-output driving motor is used. Therefore, there is a need to employ a small-diameter pulley as the driving pulley and the driven pulley and set the belt attachment tension (axial load, tension) to be lower. In Patent Document 1, although there is description regarding a small-diameter pulley, there is no description regarding a belt attachment tension (axial load, tension) according to reductions in the size and output of a driving motor.

On the other hand, when the belt attachment tension (axial load, tension) is set to be low, the degree of engagement between the toothed belt and the teeth of the pulley is weakened, and there may be a case where belt speed variation increases.

In this respect, as disclosed in Patent Document 2, when engagement between a belt tooth part and a pulley tooth groove part is not smoothly performed, that is, in a case where a belt tooth tip part comes into contact with a pulley tooth side surface part before the belt tooth part and the pulley tooth groove part reach complete engagement positions, a belt pitch line is pushed upward during the engagement, which causes up-and-down movement of the belt pitch line. The up-and-down movement of the belt pitch line itself is directly connected to speed variation due to engagement, that is, belt speed variation in an engagement period. Accordingly, it is known that by effectively suppressing interference during the engagement between the belt tooth part and the pulley tooth groove part and providing optimal design of a tooth shape enabling smooth engagement, belt speed variation can be suppressed to a certain degree.

In addition, the up-and-down movement of a belt pitch line, which is the cause of belt speed variation, is mainly dependent on the degree of the dimensional stability of a belt based on the specification of cords of the belt, or on the bendability of the belt. The degree of the dimensional stability of the belt is directly connected to the degree of engagement accuracy of the belt and is thus directly connected to belt speed variation due to engagement. Therefore, there is a need to select a cord made of a material which causes a high cord elastic modulus and small dimensional change over time due to moisture absorption or the like. In addition, the bendability of the belt means the flexibility of the belt when the belt is wound around a pulley, and is primarily dependent on whether or not the cord itself is flexible, that is, on the configuration of the tension member such as the material of the cord, the diameters of fibers and the cord, and twists. Furthermore, the bendability of the belt is also dependent on the dimensions of the belt in the thickness direction thereof, particularly, the size of a back side thickness. Regarding the setting of the back side thickness, in the case of a toothed belt made of a urethane resin, particularly one having a small tooth pitch, it is set to have a necessary minimum thickness such that the point of view (ease of casting) regarding production (using a casting method) and the point of view regarding on materials costs (the thinner, the better) can be made compatible with each other. Therefore, even in a case of a low belt attachment tension, the belt can be smoothly and easily wound around a pulley having a smaller diameter without causing pitch deviation as long as the dimensional stability of the belt or the bendability of the belt can be enhanced. Accordingly, up-and-down movement of the belt pitch line can be suppressed, and belt speed variation due to engagement can be reduced.

In this respect, Patent Document 3 discloses a toothed belt which uses a polyarylate fiber cord as a tension member and thus has high strength and a high modulus, secures dimensional stability over time, has excellent bendability (furthermore, durability) and thus suppresses a load (starting torque) on a motor, and is particularly effectively used in power transmission of a high-precision device. However, description focusing on belt speed variation is not found therein.

PRIOR ART DOCUMENT

PATENT DOCUMENT

Patent Document 1: JP-A-2011-133022
Patent Document 2: JP-A-2002-98202
Patent Document 3: JP-A-2002-349636

SUMMARY OF THE INVENTION

PROBLEMS THAT THE INVENTION IS TO SOLVE

An object of the present invention is to provide a toothed belt that has dimensional stability, bendability, and durability over time even in the case where a belt attachment tension (axial load, tension) is set to be low (even in the case of a low tension), and can suppress belt speed variation.

MEANS FOR SOLVING THE PROBLEMS

In order to solve the problems, one aspect of the present invention is a toothed belt containing a back side, tooth parts, and a tension member embedded in the back side,

in which the back side and the tooth part contain a urethane resin composition,
the tension member is a twisted cord constituted by glass fiber filaments or is a twisted cord constituted by polyarylate fiber filaments,
in the case where the tension member is the twisted cord constituted by glass fiber filaments, the tooth parts have a pitch therebetween of from 0.45 to 0.60 mm, the glass fiber filament has a diameter of from 6 to 9 micrometers, and the cord has a cord diameter of from 0.14 to 0.20 mm, and
in the case where the tension member is the twisted cord constituted by polyarylate fiber filaments, the tooth parts have a pitch therebetween of from 0.45 to 0.71 mm, and the cord has a cord diameter of from 0.14 to 0.28 mm.

In this configuration, in the case where the tension member is the twisted cord constituted by glass fiber filaments, the pitch between the tooth parts is set to be from 0.45 to 0.60 mm. Therefore, the number of teeth of the toothed belt can be increased as compared to one in which the pitch between tooth parts is greater than 0.60 mm. Accordingly, when the toothed belt is wound around a pulley having a small diameter, a polygonal shape generated due to the engagement between the teeth of the toothed belt and the teeth of the pulley can be caused to approach a circular shape. Accordingly, up-and-down movement of the running line (belt pitch line) of the toothed belt during the toothed belt runs between the pulleys is suppressed, and belt speed variation (speed variation) during the running of the toothed belt can be reduced.

In addition, when using the twisted cord which is constituted by glass fiber filaments (with a filament diameter of from 6 to 9 micrometers) and has a cord diameter of from 0.14 to 0.20 mm as the tension member, the bendability of the toothed belt can be increased as compared to one having a cord diameter of greater than 0.20 mm. Accordingly, the toothed belt can be wound around pulleys having small diameters with low tension.

Furthermore, since the cord diameter of the cord is small, the back side of the toothed belt can be reduced in thickness. This also can increase the bendability of the toothed belt.

In addition, by using glass fiber filaments in the tension member, the long-term and environmental dimensional stability of the toothed belt can be ensured.

In addition, by enhancing the dimensional stability and the bendability of the toothed belt, even in the case where the toothed belt is wound around pulleys having small diameters with low tension, belt speed variation during the running of the toothed belt can be reduced.

In the case where the tension member is the twisted cord constituted by polyarylate fiber filaments, the pitch between the tooth parts is set to be from 0.45 to 0.71 mm. Therefore, the number of teeth of the toothed belt can be increased as compared to one in which the pitch between tooth parts is greater than 0.71 mm. Accordingly, when the toothed belt is wound around a pulley having a small diameter, a polygonal shape generated due to the engagement between the teeth of the toothed belt and the teeth of the pulley can be caused to approach a circular shape. Accordingly, up-and-down movement of the running line (belt pitch line) of the toothed belt during the toothed belt runs between the pulleys is suppressed, and belt speed variation (speed variation) during the running of the toothed belt can be reduced.

In addition, when using the twisted cord which is constituted by polyarylate fiber filaments and has a cord diameter of from 0.14 to 0.28 mm as the tension member, the bendability of the toothed belt can be increased as compared to one having a cord diameter of greater than 0.28 mm. Accordingly, the toothed belt can be wound around pulleys having small diameters with low tension.

Furthermore, since the cord diameter of the cord is small, the back side of the toothed belt can be reduced in thickness. This also can increase the bendability of the toothed belt.

In addition, by using polyarylate fiber filaments in the tension member, the long-term and environmental dimensional stability of the toothed belt can be ensured.

In addition, by enhancing the dimensional stability and the bendability of the toothed belt, even in the case where the toothed belt is wound around pulleys having small diameters with low tension, belt speed variation during the running of the toothed belt can be reduced.

Moreover, by enhancing the dimensional stability and the bendability of the toothed belt, the starting torque (of a driving motor attached to the shaft of a driving pulley) can be reduced, and power transmission performance at the time of starting-up can be enhanced.

It is preferable that the toothed belt is used under a condition that an axial load, which is a load exerted on a shaft of a pulley when the toothed belt is wound around the pulley with a belt tension, becomes from 5 to 15 N.

In this configuration, since the axial load when the toothed belt is wound around pulleys with a belt tension is set to as relatively low as from 5 to 15 N, a load on the shaft of the pulley can be reduced. When the load on the shaft of the pulley can be reduced, for example, as a driving motor attached to the pulley, a low-output and small one can be used. Therefore, a reduction in the size of the driving motor and power saving can be achieved.

In addition, since the axial load is set to as relatively low as from 5 to 15 N, the durability (service life) of the toothed belt can be increased.

The reason that the axial load is set to from 5 to 15 N for use is as follows. First, in the case where the axial load is lower than 5 N, the tension of the belt is too low to allow the toothed belt to be suspended between the pulleys, and synchronous power transmission performance between the pulleys cannot be sufficiently exhibited. On the other hand, 15 N is regarded as the maximum value of the axial load with which the low-output and small type motor can be employed to drive an apparatus. In the case where the axial load is higher than 15 N, an excessive load is exerted on the shaft of the low-output and small type motor, and sufficient torque performance of the motor cannot be exhibited.

ADVANTAGEOUS EFFECT OF THE INVENTION

It can be provided a toothed belt which has dimensional stability, bendability, and durability over time even when a belt attachment tension (axial load and tension) is set to be low, and can suppress belt speed variation.

BRIEF DESCRIPTION OF DRAWINGS

[FIG. 1] FIG. 1 is a schematic explanatory view of a toothed belt according to a first embodiment.
[FIG. 2] FIG. 2 is a cross-sectional perspective view and a side view of the toothed belt according to the first embodiment, in which FIG. 2(A) is the cross-sectional perspective view, and FIG. 2(B) is the side view.
[FIG. 3] FIG. 3 is an explanatory view of a speed variation ratio test.
[FIG. 4] FIG. 4 is an explanatory view of a durable running test.
[FIG. 5] FIG. 5 is a graph showing the relationship between axial loads and belt speed variation ratios in the speed variation ratio test.
[FIG. 6] FIG. 6 is a graph showing the relationship between tooth pitches and belt speed variation ratios in the speed variation ratio test.

[FIG. 7] FIG. 7 is a graph showing the relationship between the numbers of days elapsed and inter-axis distance variation ratios in a toothed belt according to Example 4 of a first Example.

[FIG. 8] FIG. 8 is a graph showing the relationship between axial loads and starting torques regarding toothed belts according to Comparative Example 7 and Example 4 of the first Example.

[FIG. 9] FIG. 9 is a graph showing the relationship between axial loads and belt speed variation ratios in a speed variation ratio test.

[FIG. 10] FIG. 10 is a graph showing the relationship between tooth pitches and belt speed variation ratios in the speed variation ratio test.

[FIG. 11] FIG. 11 is a graph showing the relationship between the numbers of days elapsed and inter-axis distance variation ratios in toothed belts according to Comparative Example 1 and Example 3 of a second Example.

[FIG. 12] FIG. 12 is a graph showing the relationship between axial loads and starting torques in a belt bendability test of the second Example.

MODE FOR CARRYING OUT THE INVENTION

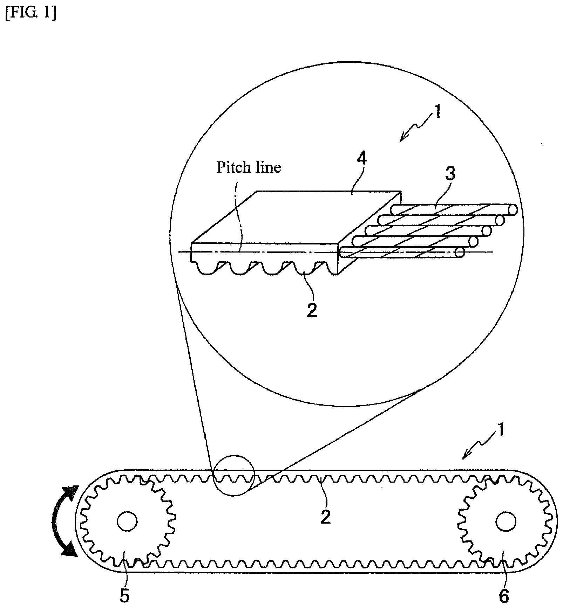

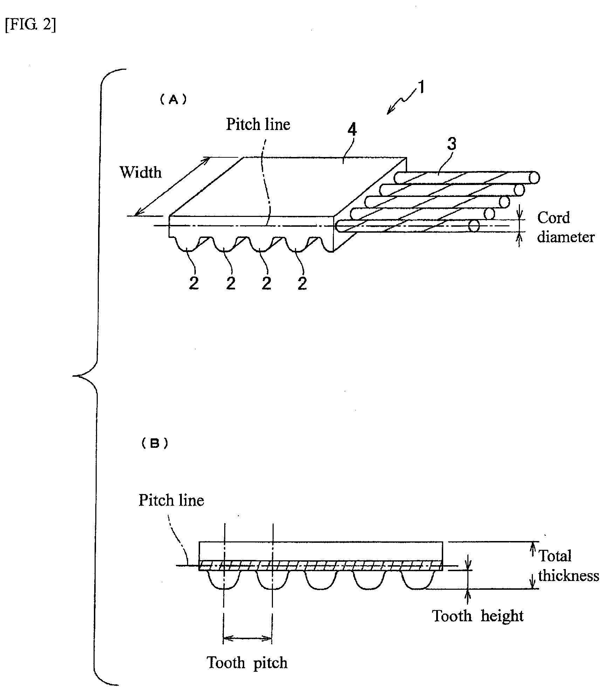

Hereinafter, embodiments of the present invention will be described with reference to the drawings. FIG. 1 and FIG. 2 illustrate a toothed belt 1 according to an embodiment of the present invention.

(First Embodiment)

As illustrated in FIG. 1, a toothed belt 1 according to a first embodiment is used while being wound around a driving pulley 5 and a driven pulley 6. Accordingly, synchronous power transmission between the driving pulley 5 and the driven pulley 6 is possible.

The toothed belt 1 is constituted by a plurality of tooth parts 2 which are disposed along a belt longitudinal direction, tension members 3 which are provided as reinforcing core members on a belt pitch line of the toothed belt 1, and a back side 4 in which the tension members 3 are embedded. In addition, a tooth pitch which is the distance between a tooth part 2 and another tooth part 2, as illustrated in FIG. 2(B), is formed to be from 0.45 to 0.60 mm. The shape of the tooth part 2 is illustrated as a round tooth shape, but is not limited thereto and may be arbitrarily selected from a trapezoidal cross-sectional shape, a triangular cross-sectional shape, and the like.

The tooth part 2 and the back side 4 of the toothed belt 1 are made of a urethane resin composition. The urethane resin composition may be obtained by casting and heating a liquid urethane raw material. General forming methods include: a one-shot method in which a premix liquid, which is obtained by mixing a polyol, a catalyst, a chain extender, a pigment, and the like together, is mixed with a solution containing an isocyanate component and the mixture is cast and subjected to a curing reaction; and a prepolymer method in which a prepolymer, which is preliminarily obtained by modifying a portion of an isocyanate with a polyol through a reaction between the isocyanate and the polyol, is mixed with a curing agent, and the mixture is cast and subjected to a cross-linking reaction. In the present invention, the prepolymer method is preferably used.

The isocyanate is not limited, and an aromatic polyisocyanate, an aliphatic polyisocyanate, an alicyclic polyisocyanate, and modified products thereof may be used. Specific examples thereof include toluene diisocyanate (TDI), methylene diisocyanate (MDI), xylylene diisocyanate (XDI), naphthalene diisocyanate (NDI), hexamethylene diisocyanate (HDI), and isophorone diisocyanate (IPDI). Among these, TDI and MDI are preferably used.

As the polyol, an ester-based polyol, an ether-based polyol, an acrylic polyol, a polybutadiene polyol, a mixed polyol thereof, and the like may be employed. Examples of the ether-based polyol include polyethylene ether glycol (PEG), polypropylene ether glycol (PPG), and polytetramethylene ether glycol (PTMG). Examples of the ester-based polyol include polyethylene adipate (PEA), polybutylene adipate (PBA), and polyhexamethylene adipate (PHA), and poly-ε-caprolactone (PCL).

As the curing agent, an amine compound such as a primary amine, a secondary amine, and a tertiary amine may be used. Specifically, use can be made of 1,4-phenylenediamine, 2,6-diaminotoluene, 1,5-naphthalenediamine, 4,4'-diaminodiphenylmethane, 3,3'-dichloro-4,4'-diaminodiphenylmethane (hereinafter referred to as MOCA), 3,3'-dimethyl-4,4'-diaminodiphenylmethane, 1-methyl-3,5-bis(methylthio)-2,6-diaminobenzene, 1-methyl-3,5'-diethyl-2,6-diaminobenzene, 4,4'-methylene-bis-(3-chloro-2,6-diethylaniline), 4,4'-methylene-bis-(ortho-chloroaniline), 4,4'-methylene-bis-(2,3-dichloroaniline), trimethylene glycol di-para-aminobenzoate, 4,4'-methylene-bis-(2,6-diethylaniline), 4,4'-methylene-bis-(2,6 diisopropylaniline), 4,4'-methylene-bis-(2-methyl-6-isopropylaniline), 4,4'-diaminodiphenylsulfone, and the like.

In addition to the above-mentioned components, additives such as a plasticizer, a pigment, a defoamer, a filler, a catalyst, and a stabilizer may be blended thereto. As the plasticizer, generally, use can be made of dioctyl phthalate (DOP), dibutyl phthalate (DBP), dioctyl adipate (DOA), tricresyl phosphate (TCP), chlorinated paraffin, dialkyl phthalate, and the like.

As the catalyst, an organic carboxylic acid compound which is an acid catalyst may be used. Specifically, use can be made of an aliphatic carboxylic acid such as azelaic acid, oleic acid, sebacic acid, and adipic acid, and an aromatic carboxylic acid such as benzoic acid and toluic acid. Other than that, an amine compound represented by triethylamine, N,N-dimethylcyclohexylamine, and triethylenediamine, and an organometallic compound represented by stannous octoate, dibutyltin dilaurate, and dioctyltin mercaptide can be appropriately used.

Next, an example of a preparation process of the urethane raw material is described. An A liquid in which a urethane prepolymer obtained by allowing the isocyanate and the polyol to react with each other is mixed with a defoamer and a plasticizer as necessary is prepared and is stored at from 50°C to 85°C. In addition, a B liquid in which a curing agent is completely dissolved under an atmospheric temperature of 120°C or higher is prepared. In a case where a catalyst is mixed with the urethane raw material, it is preferable that it is preliminarily stirred and mixed in the B liquid.

As a belt forming method, a common production method may be applied. That is, a belt sleeve is produced by stirring and mixing the A liquid and the B liquid together and injecting the mixture into a mold in a state in which cords are spirally wound around the mold, and heating the resultant under predetermined conditions for cross-linking, and thereafter the resultant is cut into a predetermined width, thereby producing a toothed belt.

The tension member 3 is a twisted cord into which glass fiber filaments are twisted, and which is prepared by bundling, for example, about 200 glass fiber filaments each having a diameter of from 6 to 9 micrometers (filament diameter) and arranging and twisting them to form a strand (original yarn), performing a urethane immersion treatment thereon, and then imparting thereto a predetermined number of twists, to adjust the cord diameter to be from 0.14 to 0.20 mm. For example, about 200 glass fiber filaments each having a diameter of from 6 to 9 micrometers are bundled, and arranged and twisted to prepare a strand, and the strand is subjected to a urethane immersion treatment, and further thereto is imparted a twist of the number of twists of 17 twists/10 cm so as to produce a twisted cord having a cord diameter of 0.17 mm. As described above, the cord diameter of the tension member 3 is adjusted to be from 0.14 to 0.20 mm by appropriately adjusting the number of twists.

(Second Embodiment)

Hereinafter, a second embodiment of the present invention will be described. Description of elements which are similar to those of the first embodiment is appropriately omitted. That is, as to elements which are not described below specifically, the same description as that of the corresponding elements in the first embodiment is applied.

A toothed belt 1 according to the second embodiment is constituted by a plurality of tooth parts 2 which are disposed along a belt longitudinal direction, tension members 3 which are provided as reinforcing core members on a belt pitch line of the toothed belt 1, and a back side 4 in which the tension members 3 are embedded. In addition, a tooth pitch which is the distance between a tooth part 2 and another tooth part 2, as illustrated in FIG. 2(B), is formed to be from 0.45 to 0.71 mm.

The tension member 3 is a twisted cord into which polyarylate fiber filaments are twisted, and which is prepared by bundling, for example, 20 polyarylate fiber filaments (filament fineness) each having a fineness of, for example, 5.5 dtex and arranging and twisting them to form a strand (original yarn) of 110 dtex in total, and then imparting thereto a predetermined number of twists, to adjust the cord diameter to be from 0.14 to 0.28 mm (hereinafter, polyarylate cord). For example, 20 polyarylate fiber filaments each having a fineness of 5.5 dtex are bundled, and arranged and twisted to prepare a strand of 110 dtex in total, and to the strand is imparted a twists of the number of twists of 43 twists/10 cm so as to produce a twisted cord having a cord diameter of 0.17 mm. As described above, the cord diameter of the tension member 3 is adjusted to be from 0.14 to 0.28 mm by appropriately adjusting the number of twists. In addition, an adhesion treatment may not be performed on the polyarylate cord. The polyarylate fiber is a fully aromatic polyester fiber formed through a condensation of a phthalic acid or isophthalic acid with a bisphenol, and for example, is classified into a rigid fiber group including a rigid heterocyclic polymer fiber such as polyparaphenylene benzobisoxazole and a fully aromatic polyester fiber such as meta-aramid and para-aramid. In general, a rigid fiber is regarded as having low adhesion to rubber. However, in the present invention, since the belt body (tooth parts 2 and back side 4) is formed of a urethane composition, integration of the body of the toothed belt 1 and the tension members 3 is possible without performing an adhesion treatment on the polyarylate fiber cord.

EXAMPLES

Next, 1. Speed Variation Ratio Test, 2. Durable Running Test, 3. Belt Dimensional Stability Test, and 4. Belt Bendability Test were conducted on the toothed belts having the configurations of each of the embodiments of the present invention as Examples and on toothed belts which did not have the configurations of the embodiments as Comparative Examples.

(1. Speed Variation Ratio Test)

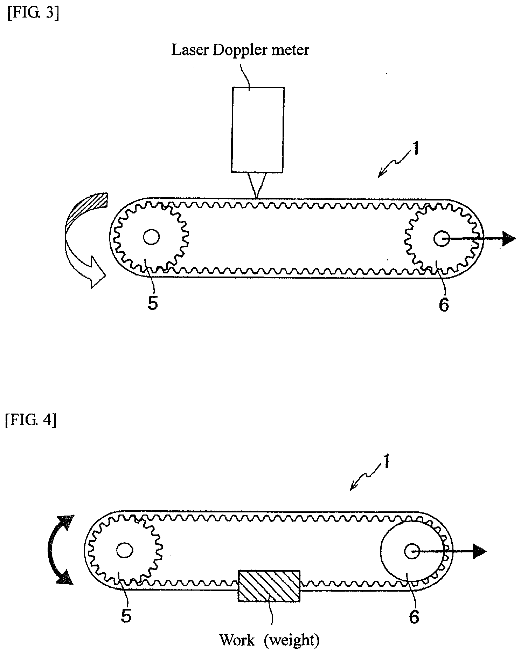

In the speed variation ratio test, speed variation when the toothed belt 1 runs in a biaxial layout illustrated in FIG. 3 was measured by a laser Doppler meter, and a belt speed variation ratio (%) at a primary frequency during engagement was obtained through frequency analysis.

Specifically, as illustrated in FIG. 3, the toothed belt 1 was suspended between the driving pulley 5 and the driven pulley 6 (the driving pulley 5 and the driven pulley 6 are toothed pulleys having the same number of teeth, tooth pitch, and pitch circle diameter), and the driven pulley 6 was moved to apply a predetermined tension to the toothed belt 1 and was fixed such that a predetermined axial load (in this test, 5 N, 10 N, 15 N, and 20 N) was applied. Next, the driving pulley 5 was rotated at 1,200 rpm. After the axial load was stabilized at a predetermined numerical value, speed variation in the toothed belt 1 was measured by the laser Doppler meter, and the belt speed variation ratio (%) was calculated.

The laser Doppler meter is a non-contact type measuring instrument which uses the Doppler effect of a laser beam. In addition, a load exerted on a shaft of a pulley (the driven pulley 6 or the driving pulley 5) when a belt was wound around the pulleys (the driving pulley 5 and the driven pulley 6) due to a belt tension was referred to as the axial load. The belt speed variation ratio (sometimes simply referred to as a speed variation ratio) is defined by the following expression as the percentage of a variation amount $\Delta V$ of a rotational speed with respect to an average rotational speed V0.

$$\text{Belt speed variation ratio} = (\Delta V\ /\ V0) \times 100\ (\%)$$

(2. Durable Running Test)

In the durable running test, a work (weight), which is assumed to be a printer carriage or the like, was mounted on the toothed belt 1 in a biaxial layout illustrated in FIG. 4, the toothed belt 1 was allowed to repeat a reciprocating motion, and the functional characteristics (the presence or absence of tooth chipping, tooth root cracking, wear, cutting, and the like, and the residual ratio of a belt tensile strength) of the toothed belt 1 were evaluated.

Specifically, as illustrated in FIG. 4, the toothed belt 1 having a work (weight) of 350 g mounted thereon was suspended between the driving pulley 5 and the driven pulley 6, and the driven pulley 6 was moved to apply a predetermined tension to the toothed belt 1 and was fixed such that an axial load of 15 N was applied. Next, the toothed belt 1 having the work mounted thereon was allowed to perform a reciprocating motion such that the driving pulley 5 was rotated at 600 rpm and then the driving pulley 5 was reversely rotated at 600 rpm when the work movement distance reached 140 mm. The reciprocating motion was repeated 1,000,000 times (2,000,000 passes), and the functional characteristics (the presence or absence of tooth chipping, tooth root cracking, wear, cutting, and the like, and the residual ratio of a belt tensile strength) of the toothed belt 1 were evaluated. The number of teeth, tooth pitch, and pitch circle diameter of the driving pulley 5 used are shown in Tables 4 and 11. In addition, as the driven pulley 6, a flat pulley ($\phi$10 mm) was used. As the evaluation criteria, in the case where tooth chipping, tooth root cracking, abnormal wear, cutting, or the like was present in a toothed belt, it was evaluated poor (C). Furthermore, in the case where tooth chipping, tooth root cracking, abnormal wear, cutting, or the like was absent in a toothed belt, the residual ratio of the belt tensile strength (the residual ratio with respect to the toothed belt before the durable running test) was measured. The case of 85% or higher was evaluated as excellent (S), the case of 80% or higher and lower than 85% was evaluated as good (A), and the case of lower than 80% was evaluated as poor (C).

(3. Belt Dimensional Stability Test)

In the belt dimensional stability test, the toothed belts 1 of Comparative Examples and Examples were stored in a free state in an environment with a room temperature of 40°C and a humidity of 90%, and the number of days elapsed and the dimensional variation ratio of the belt was measured.

Specifically, as for the measurement of the dimensional variation ratio, the toothed belt 1 was suspended between two toothed pulleys in the same environment as that during the storage, and the inter-axis distance between the pulleys was measured under an axial load of 12 N, and an inter-axis distance variation ratio compared to the initial inter-axis distance between the pulleys was measured. As the evaluation criteria, the case where the inter-axis distance variation ratio (absolute value) for the number of days elapsed of 10 days was 0.02% or lower was evaluated as good (A), and the case of exceeding 0.02% was evaluated as poor (C).

(4. Belt Bendability Test)

In the belt bendability test, as an alternative test for the bendability and ease of start-up (power transmission performance at starting-up) of the toothed belt 1, a starting torque was measured.

Specifically, as illustrated in FIG. 3, the toothed belt 1 was suspended between the driving pulley 5 and the driven pulley 6 (the driving pulley 5 and the driven pulley 6 are toothed pulleys having the same number of teeth, tooth pitch, and pitch circle diameter), and the driven pulley 6 was moved to apply a predetermined tension to the toothed belt 1 such that a predetermined axial load (in this test, 5 N, 10 N, 20 N, and 30 N) was exerted on the toothed belt 1. Thereafter, yarn was wound around the driving pulley 5, and a load cell connected on the leading edge of the yarn was pulled. At this time, a torque value (starting torque N·m) when the driven pulley 6 starts to rotate was measured. As the evaluation criteria, compared to the level of the starting torque in Comparative Example with an axial load of 10 N (Comparative Example 7 in both a first example and second example), an equivalent case was evaluated as possible (B), and a case with a lower level was evaluated as good (A) (in addition, a significantly lower level was evaluated as excellent (S)).

(First Example)

The toothed belt 1 having the configuration according to the first embodiment of the present invention was taken as the first Example, and evaluated.

The toothed belt 1 used in each test of the first Example was formed of a polyurethane composition (mixture A: 100 parts by mass of a urethane prepolymer having an NCO content of 4.1%, about 12 parts by mass of a amine-based curing agent (MOCA), about 20 parts by mass of a plasticizer (dialkyl phthalate), and 0.2 parts by mass of a catalyst (azelaic acid)). The mixture A is appropriate even from the viewpoint of adhesion to the tension member 3. The tension member 3 was a twisted cord into which glass fiber filaments were twisted, and which had been made to have a predetermined cord diameter (see Table 1) by bundling about 200 glass fiber filaments and arranging and twisting them to form a strand (original yarn), performing a urethane immersion treatment thereon, and then imparting thereto a predetermined number of twists. In addition, the toothed belt 1 was produced in the above-described method.

Regarding the toothed belts 1, each test was conducted by using the toothed belts according to Examples and Comparative Examples produced by changing conditions (the length of the tooth pitch, the cord diameter, the filament diameter, etc.) in each test. The conditions of the configurations of the toothed belts according to Examples 1 to 6 and Comparative Examples 1 to 9 are shown in Table 1.

In addition, the test results of 1. Speed Variation Ratio Test, 2. Durable Running Test, 3. Belt Dimensional Stability Test, and 4. Belt Bendability Test are summarized and shown in Table 1. Regarding some of Examples and Comparative Examples, the test results of 1. Speed Variation Ratio Test are shown in Table 2 and Table 3, the test results of 2. Durable Running Test are shown in Table 4, the test results of 3. Belt Dimensional Stability Test are shown in Table 5, the test results of 4. Belt Bendability Test are shown in Table 6 and Table 7, and they were compared and examined in detail.

[Table 1]

Table 1

| | | | Comp. Ex. 1 | Ex. 1 | Comp. Ex. 2 | Ex. 2 | Comp. Ex. 3 | Ex. 3 | Ex. 4 | Comp. Ex. 4 | Ex. 5 | Comp. Ex. 5 | Ex. 6 | Comp. Ex. 6 | Comp. Ex. 7 | Comp. Ex. 8 | Comp. Ex. 9 |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Belt configuration | Tooth part | Tooth pitch mm (inch) | 0.400 | 0.450 | 0.508 (1/50) | 0.508 (1/50) | 0.508 (1/50) | 0.508 (1/50) | 0.508 (1/50) | 0.508 (1/50) | 0.508 (1/50) | 0.508 (1/50) | 0.600 | 0.650 | 0.706 (1/36) | 0.800 | 0.850 |
| | Tension member | Glass | ○ | ○ | ○ | ○ | ○ | ○ | ○ | ○ | ○ | ○ | ○ | ○ | ○ | ○ | ○ |
| | | Cord diameter mm | 0.17 | 0.17 | 0.12 | 0.14 | 0.17 | 0.17 | 0.17 | 0.17 | 0.20 | 0.22 | 0.17 | 0.24 | 0.24 | 0.24 | 0.24 |
| | | Filament diameter $\mu$m | 9 | 9 | 9 | 9 | 5 | 6 | 9 | 10 | 9 | 9 | 9 | 9 | 9 | 9 | 9 |
| | Belt body | Number of teeth teeth | 1,800 | 1,600 | 1,436 | 1,436 | 1,436 | 1,436 | 1,436 | 1,436 | 1,436 | 1,436 | 1,200 | 1,110 | 1,010 | 900 | 850 |
| | | Pitch length mm | 720.00 | 720.00 | 729.49 | 729.49 | 729.49 | 729.49 | 729.49 | 729.49 | 729.49 | 729.49 | 720.00 | 721.50 | 712.66 | 720.00 | 722.50 |
| | | Width mm | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | | Total thickness mm | 0.5 | 0.5 | 0.5 | 0.5 | 0.5 | 0.5 | 0.5 | 0.5 | 0.5 | 0.5 | 0.5 | 0.85 | 0.85 | 0.85 | 0.85 |
| | | Tooth height mm | 0.2 | 0.2 | 0.2 | 0.2 | 0.2 | 0.2 | 0.2 | 0.2 | 0.2 | 0.2 | 0.2 | 0.35 | 0.35 | 0.35 | 0.35 |
| | | Number of effective cords number | 8 | 8 | 8 | 8 | 8 | 8 | 8 | 8 | 8 | 8 | 8 | 5 | 5 | 5 | 5 |
| Speed variation | Driving pulley (same in diameter) | Number of teeth teeth | 46 | 40 | 36 | 36 | 36 | 36 | 36 | 36 | 36 | 36 | 30 | 28 | 26 | 23 | 22 |
| | | Pitch circle diameter mm | 5.857 | 5.730 | 5.821 | 5.821 | 5.821 | 5.821 | 5.821 | 5.821 | 5.821 | 5.821 | 5.730 | 5.793 | 5.840 | 5.857 | 5.952 |
| | Speed variation ratio | During axial load of 5 N % | 0.22 A | 0.24 A | A | A | A | A | 0.28 A | A | A | C | 0.38 A | 0.45 C | 0.54 C | 0.75 C | 0.88 C |

EP 3 792 521 B1

(continued)

| | | | Comp. Ex. 1 | Ex. 1 | Comp. Ex. 2 | Ex. 2 | Comp. Ex. 3 | Ex. 3 | Ex. 4 | Comp. Ex. 4 | Ex. 5 | Comp. Ex. 5 | Ex. 6 | Comp. Ex. 6 | Comp. Ex. 7 | Comp. Ex. 8 | Comp. Ex. 9 |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Durability | Number of reciprocating motions | Work weight of 350 g, axial load of 15 N / Number of stops: 1,000,000 reciprocating motions | Tooth root cracking | | Cutting | Residual ratio 86.3% | Tooth chipping | Residual ratio 88.2% | Residual ratio 88.0% | Residual ratio 75.6% | Residual ratio 85.5% | Residual ratio 69.4% | | | | | |
| | | | C | S | C | S | C | S | S | C | S | C | S | A | A | A | A |
| Dimensional stability | Dimensional change ratio | Inter-axis distance when 12 N / 40°C, humidity of 90%, 10 days | A | A | A | A | A | A | A | A | A | A | A | A | A | A | A |
| Bendability | Starting torque | N·m When 10 N, others | A | A | A | A | A | A | A | B | A | B | A | B | B | B | B |
| Comprehensive evaluation | | | C | A | C | A | C | A | A | C | A | C | A | C | C | C | C |

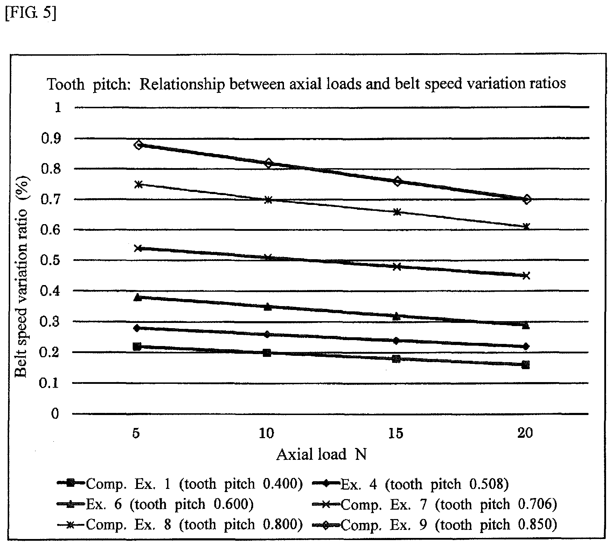

In the speed variation ratio test, as shown in Table 2, the belt speed variation ratios of the toothed belts of Example 4, Example 6, Comparative Example 1, Comparative Example 7, Comparative Example 8, and Comparative Example 9 in the case where the axial load was set to 5 N, 10 N, 15 N, and 20 N were calculated and evaluated. As the evaluation criteria, the case where a belt speed variation ratio is 0.40% or less was evaluated as good (A), and the case of exceeding 0.40% was evaluated as poor (C). Here, the reason that the case of a belt speed variation ratio of 0.40% or less was evaluated as good as the evaluation criteria is that, when the toothed belt is used to drive a printer carriage or the like on the assumption that a low-output and small type motor is used, in the case where the belt speed variation ratio is 0.40% or less, high-precision positioning can be secured regarding driving of the printer carriage, and printing variation does not occur. A table that summarizes the results of the speed variation ratio test is shown in Table 2. FIG. 5 is a drawing graphically showing the relationship between the axial loads and the belt speed variation ratios of the toothed belts according to Examples and Comparative Example in the speed variation ratio test.

[Table 2]

Table 2

|  | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 1 | 5 | Glass | 0.400 | 46 | 5.857 | 0.22 | A |
|  | 10 | Glass | 0.400 |  |  | 0.20 | A |
|  | 15 | Glass | 0.400 |  |  | 0.18 | A |
|  | 20 | Glass | 0.400 |  |  | 0.16 | A |
| Ex. 4 | 5 | Glass | 0.508 | 36 | 5.821 | 0.28 | A |
|  | 10 | Glass | 0.508 |  |  | 0.26 | A |
|  | 15 | Glass | 0.508 |  |  | 0.24 | A |
|  | 20 | Glass | 0.508 |  |  | 0.22 | A |
| Ex. 6 | 5 | Glass | 0.600 | 30 | 5.730 | 0.38 | A |
|  | 10 | Glass | 0.600 |  |  | 0.35 | A |
|  | 15 | Glass | 0.600 |  |  | 0.32 | A |
|  | 20 | Glass | 0.600 |  |  | 0.29 | A |
| Comp. Ex. 7 | 5 | Glass | 0.706 | 26 | 5.840 | 0.54 | C |
|  | 10 | Glass | 0.706 |  |  | 0.51 | C |
|  | 15 | Glass | 0.706 |  |  | 0.48 | C |
|  | 20 | Glass | 0.706 |  |  | 0.45 | C |
| Comp. Ex. 8 | 5 | Glass | 0.800 | 23 | 5.857 | 0.75 | C |
|  | 10 | Glass | 0.800 |  |  | 0.7 | C |
|  | 15 | Glass | 0.800 |  |  | 0.66 | C |
|  | 20 | Glass | 0.800 |  |  | 0.61 | C |
| Comp. Ex. 9 | 5 | Glass | 0.850 | 22 | 5.952 | 0.88 | C |
|  | 10 | Glass | 0.850 |  |  | 0.82 | C |
|  | 15 | Glass | 0.850 |  |  | 0.76 | C |
|  | 20 | Glass | 0.850 |  |  | 0.70 | C |

According to the speed variation ratio test, from the test results of Example 4, Example 6, Comparative Example 1, Comparative Example 7, Comparative Example 8, and Comparative Example 9, it was found that the belt speed variation ratio increased as the axial load during the running of the toothed belt decreased (see FIG. 5).

As shown in Table 2 and FIG. 5, in the cases where the tooth pitch was set to 0.400 mm (Comparative Example 1), 0.508 mm (Example 4), and 0.600 mm (Example 6), the belt speed variation ratio was 0.40% or less and was evaluated as good (A) in all cases where the axial load was set to any value of 5 N, 10 N, 15 N, and 20 N. On the other hand, in cases where the tooth pitch was set to 0.706 mm (Comparative Example 7), 0.800 mm (Comparative Example 8), and 0.850 mm (Comparative Example 9), the belt speed variation ratio was higher than 0.40% and was evaluated as poor (C) in all cases where the axial load was set to any value of 5 N, 10 N, 15 N, and 20 N.

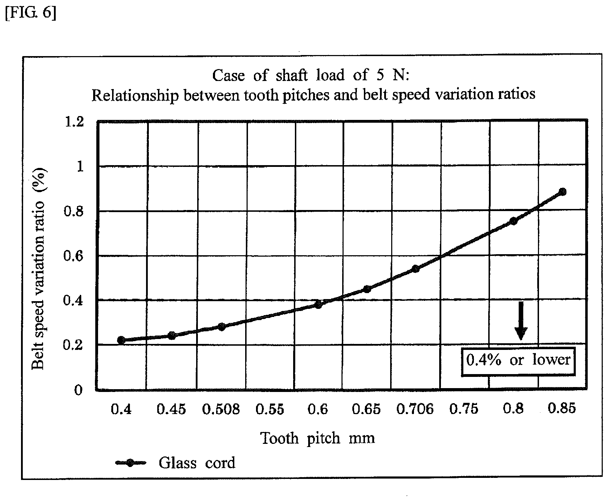

In addition, in the speed variation ratio test, as shown in Table 1, the belt speed variation ratios of the toothed belts of Comparative Examples 1 to 9 and Examples 1 to 6 in the case where the axial load was set to 5 N were calculated and evaluated. Table 3 shows the results of calculation and evaluation of the belt speed variation ratios of the toothed belts of Comparative Example 1, Example 1, Example 4, Example 6, Comparative Example 6, Comparative Example 7, Comparative Example 8, and Comparative Example 9 in the case where the axial load was set to 5 N. FIG. 6 is a drawing graphically showing the relationship between the tooth pitches and the belt speed variation ratios of the toothed belts according to Examples and Comparative Examples in Table 3.

[Table 3]

Table 3

| | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 1 | 5 | Glass cord | 0.400 | 46 | 5.857 | 0.22 | A |
| Ex. 1 | 5 | Glass cord | 0.450 | 40 | 5.730 | 0.24 | A |
| Ex. 4 | 5 | Glass cord | 0.508 | 36 | 5.821 | 0.28 | A |
| Ex. 6 | 5 | Glass cord | 0.600 | 30 | 5.730 | 0.38 | A |
| Comp. Ex. 6 | 5 | Glass cord | 0.650 | 28 | 5.793 | 0.45 | C |
| Comp. Ex. 7 | 5 | Glass cord | 0.706 | 26 | 5.840 | 0.54 | C |
| Comp. Ex. 8 | 5 | Glass cord | 0.800 | 23 | 5.857 | 0.75 | C |
| Comp. Ex. 9 | 5 | Glass cord | 0.850 | 22 | 5.952 | 0.88 | C |

According to the speed variation ratio test of Table 3 and FIG. 6, the belt speed variation ratio decreased as the tooth pitch decreased. In addition, in the cases where the tooth pitch was set to 0.400 mm (Comparative Example 1), 0.450 (Example 1), 0.508 mm (Example 4), and 0.600 mm (Example 6), the belt speed variation ratio was 0.40% or less and was evaluated as good (A).

In the speed variation ratio test, by setting the tooth pitch to at least a range of from 0.400 mm to 0.600 mm, the belt speed variation ratio was 0.40% or less and was evaluated as good (A) even in the case where the axial load was set to from 5 N to 20 N.

Here, in the case where the axial load is lower than 5 N, the tension of the belt is too low to allow the toothed belt 1 to be suspended between the pulleys, and synchronous power transmission performance between the pulleys cannot be sufficiently exhibited.

On the other hand, 15 N is regarded as the maximum value of the axial load with which the low-output and small type motor can be employed to drive an apparatus. In the case where the axial load is higher than 15 N, an excessive load is exerted on the shaft of the low-output and small type motor, and the torque performance of the motor cannot be sufficiently exhibited.

Therefore, since the toothed belts 1 of Examples were achieved the belt speed variation ratio evaluated as good (A) even in the cases where the axial load was set to from 5 N to 15 N, there is a merit that as a driving motor attached to the driving pulley 5 can be easily employed a low-output and small type one, for example.

In the case where the tooth pitch was set to 0.400 mm (Comparative Example 1), although the belt speed variation ratio was evaluated as good (A), in the durable running test, which will be described later, tooth root cracking had occurred, resulting in a level of poor (C) in the comprehensive evaluation.

In the durable running test, as shown in Table 1, the test was conducted on the toothed belts of Comparative Examples 1 to 9 and Examples 1 to 6. Table 4 shows the test results of the durable running test conducted on the toothed belts of Comparative Example 2 (cord diameter 0.12 mm), Example 2 (cord diameter 0.14 mm), Example 4 (cord diameter 0.17 mm), Example 5 (cord diameter 0.20 mm), and Comparative Example 5 (cord diameter 0.22 mm).

[Table 4]

Table 4

|  |  | Comp. Ex. 2 | Ex. 2 | Ex. 4 | Ex. 5 | Comp. Ex. 5 |
|---|---|---|---|---|---|---|
| Belt & driving pulley | Tooth pitch mm | 0.508 | 0.508 | 0.508 | 0.508 | 0.508 |
| Tension member | Glass | ○ | ○ | ○ | ○ | ○ |
|  | Cord diameter mm | 0.12 | 0.14 | 0.17 | 0.20 | 0.22 |
| Driving pulley | Number of teeth teeth | 36 | 36 | 36 | 36 | 36 |
|  | Pitch circle diameter mm | 5.821 | 5.821 | 5.821 | 5.821 | 5.821 |
| Result | Number of durable operations 10,000 times | 55-65 | 100 | 100 | 100 | 100 |
|  | Evaluation | Cutting C | Residual ratio 86.3% S | Residual ratio 88.0% S | Residual ratio 85.5% S | Residual ratio 69.4% C |

According to the durable running test, Example 2 (cord diameter 0.14 mm), Example 4 (cord diameter 0.17 mm), and Example 5 (cord diameter 0.20 mm) were evaluated as excellent (S). On the other hand, in Comparative Example 2 (cord diameter 0.12 mm), the toothed belt 1 was cut, resulting in a level of deteriorated durability (C). In Comparative Example 5 (cord diameter 0.22 mm), the residual ratio of the belt tensile strength of the toothed belt 1 was 69.4%, and thus the bending fatigue of the tension member increased, resulting in a level of poor (C) in the evaluation.

From the above description, it is found that when the cord diameter of the glass cord is at least in a range of from 0.14 mm to 0.20 mm, durability can be secured even in the case where the tooth pitch is set relatively small.

As shown in Table 1, in the cases where the filament diameter of the glass fiber filaments constituting the tension member was set as in Comparative Example 3 (5 $\mu$m), Example 3 (6 $\mu$m), Example 4 (9 $\mu$m), and Comparative Example 4 (10 $\mu$m), Example 3 (6 $\mu$m) and Example 4 (9 $\mu$m) were evaluated as excellent (S) in the durable running test. On the other hand, in Comparative Example 3 (5 $\mu$m), a tooth cracking state was formed, resulting in a level of deteriorated durability (C). In Comparative Example 4 (10 $\mu$m), the residual ratio of the belt tensile strength of the toothed belt 1 was 75.6%, and thus the bending fatigue of the tension member increased, resulting in a level of poor (C) in the evaluation.

From the above description, it was found that when the filament diameter (diameter) of the glass fiber filaments constituting the tension member was at least in a range of from 6 to 9 micrometers, the durability of the toothed belt 1 can be secured.

As shown in Table 1, in the durable running test of the toothed belt 1 of Comparative Example 1 (tooth pitch 0.400 mm), tooth root cracking had occurred, resulting in a level of deteriorated durability (C). It is assumed that this is because when the tooth pitch became too small, rigidity necessary for each tooth part against an engagement load between the teeth of the pulley and the teeth of the toothed belt could not be secured.

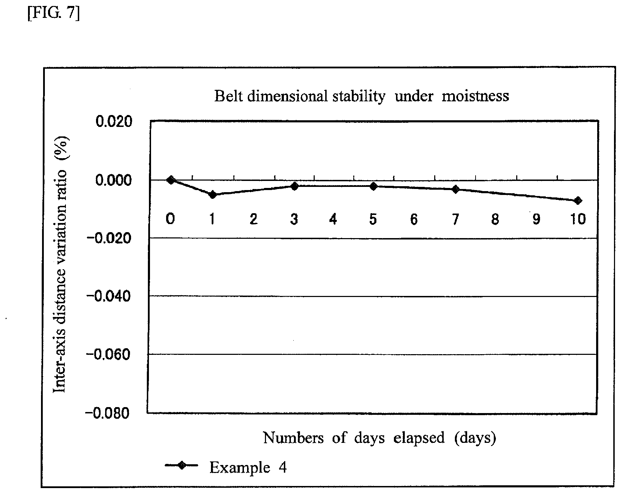

Table 5 shows the results of the belt dimensional stability test of the toothed belt 1 according to Example 4. In addition, FIG. 7 shows the relationship between the number of days elapsed and the inter-axis distance variation ratio in the toothed belt 1 according to Example 4.

[Table 5]

Table 5

|  | Cord material | Cord diameter mm | Number of days days | Inter-axis distance variation ratio % | Evaluation |
|---|---|---|---|---|---|
| Example 4 | Glass | 0.170 | 0 | 0 | A |
|  |  |  | 1 | -0.005 |  |
|  |  |  | 2 |  |  |
|  |  |  | 3 | -0.002 |  |
|  |  |  | 4 |  |  |
|  |  |  | 5 | -0.002 |  |
|  |  |  | 6 |  |  |
|  |  |  | 7 | -0.003 |  |
|  |  |  | 8 |  |  |
|  |  |  | 9 |  |  |
|  |  |  | 10 | -0.007 |  |

In the belt dimensional stability test, in any of the toothed belts 1 of Comparative Examples 1 to 9 and Examples 1 to 6, the inter-axis distance variation ratio (absolute value) for the number of days elapsed of 10 days was 0.02% or lower and was evaluated as good (A). Accordingly, it is found that even in the case where the tension member 3 having a relatively small cord diameter of from 0.14 to 0.20 mm was employed by the toothed belt 1, the inter-axis distance variation ratio had rarely varied, and thus the dimensional stability of the toothed belt 1 was sufficiently secured.

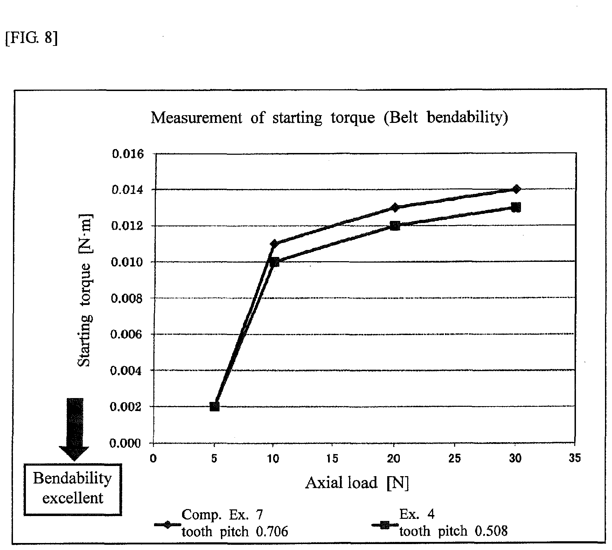

Table 6 shows the results of measurement of starting torques in the cases where the axial load was set to 5 N, 10 N, 20 N, and 30 N regarding the toothed belts according to Comparative Example 7 and Example 4. Table 7 shows a table that summarizes belt configurations, starting torques in the case where the axial load was set to 10 N, and evaluations regarding the toothed belts according to Comparative Example 7 and Example 4. FIG. 8 is a drawing graphically showing the relationship between the axial loads and the starting torques regarding the toothed belts according to Comparative Example 7 and Example 4.

[Table 6]

Table 6

| Axial load [N] | Comparative Example 7 Tooth pitch 0.706 | Example 4 Tooth pitch 0.508 |
|---|---|---|
| 5 | 0.002 | 0.002 |
| 10 | 0.011 | 0.010 |
| 20 | 0.013 | 0.012 |
| 30 | 0.014 | 0.013 |

[Table 7]

Table 7

| | | Comparative Example 7 | Example 4 |
|---|---|---|---|
| Belt & driving pulley | Tooth pitch mm | 0.706 | 0.508 |
| Tension member | Glass | ○ | ○ |
| | Cord diameter mm | 0.24 | 0.17 |
| Driving pulley | Number of teeth teeth | 26 | 36 |
| | Pitch circle diameter mm | 5.840 | 5.821 |
| Result | Starting torque during axial load of 10 N N·m | 0.011 | 0.010 |
| | Evaluation (relative evaluation) | B | A |

As shown in Table 6, Table 7 and FIG. 8, when Example 4 (cord diameter 0.17 mm) is compared with Comparative Example 7 (cord diameter 0.24 mm), it was found that a lower starting torque was achieved when the toothed belt 1 employed the tension member 3 having a relatively small diameter. Here, it is found that in the case where the starting torque of the toothed belt 1 is low, the toothed belt 1 has high bendability, that is, the toothed belt 1 that causes a low starting torque has excellent power transmission performance during start-up. Therefore, it is found that in the case where the tension member 3 has a small diameter, the toothed belt 1 has high bendability and flexibility and power transmission performance during start-up is excellent.

In addition, in the case where the bendability of the toothed belt 1 is high, even when the axial load is set to from 5 N to 15 N (low tension), the starting torque tends to decrease.

Therefore, a belt with excellent bendability and a low starting torque causes easy start-up (of a driving motor attached to the shaft of the driving pulley 5), has excellent power transmission performance during starting-up, and contributes to, as well as the employment of a small and low-output driving motor, reductions in the size and weight of the driving motor and power saving.

(Comprehensive Evaluation)

According to the results of 1. Speed Variation Ratio Test, 2. Durable Running Test, 3. Belt Dimensional Stability Test, and 4. Belt Bendability Test, when the conditions of the toothed belt 1 which was evaluated as good (A) in the evaluation of belt speed variation ratio in the speed variation ratio test, evaluated as excellent (S) in the evaluation in the durable running test, evaluated as good (A) in the result of the belt dimensional stability test, and evaluated as good (A) in the belt bendability test are summarized, it can be found that the pitch between a tooth part and another tooth part is from 0.45 to 0.60 mm, and that regarding the tension member 3, as for the twisted cord constituted by glass fiber filaments, the diameter of the filament is from 6 to 9 micrometers, and the cord diameter of the tension member 3 is from 0.14 to 0.20 mm.

In the above-described configuration, since the pitch between a tooth part 2 and another tooth part 2 is set to from 0.45 to 0.60 mm, the number of teeth of the toothed belt 1 can be increased as compared to one in which the pitch between the tooth parts 2 is greater than 0.60 mm. Accordingly, when the toothed belt 1 is wound around a pulley having a small diameter, a polygonal shape generated due to the engagement between the tooth parts 2 of the toothed belt 1 and the teeth of the pulley can be caused to more approach a circular shape. Accordingly, up-and-down movement of the running line (belt pitch line) of the toothed belt 1 when the toothed belt 1 runs between the pulleys is suppressed, and belt speed variation (speed variation) during the running of the toothed belt 1 can be reduced.

By using as the tension member 3 a twisted cord which is constituted by glass fiber filaments (with a filament diameter of from 6 to 9 micrometers) and has a cord diameter of from 0.14 to 0.20 mm, the bendability of the toothed belt 1 can be increased as compared to one having a cord diameter of greater than 0.20 mm. Accordingly, the toothed belt 1 can be wound around pulleys having smaller diameters with low tension.

Furthermore, since the cord diameter of the tension member 3 is set small, the back side 4 of the toothed belt 1 can be reduced in thickness. This also can increase the bendability of the toothed belt 1.

In addition, by using the glass fiber filaments in the tension member 3, the long-term and environmental dimensional stability of the toothed belt 1 can be ensured.

In addition, by enhancing the dimensional stability and bendability of the toothed belt 1, even in the case where the toothed belt 1 is wound around pulleys having small diameters with low tension, belt speed variation during the running of the toothed belt 1 can be reduced.

In addition, since the axial load when the toothed belt 1 is wound around pulleys with a belt tension is set to as relatively low as from 5 to 15 N, a load on the shaft of the pulley can be reduced. As the load on the shaft of the pulley can be reduced, for example, as a driving motor attached to the pulley, a low-output and small type one can be used. Therefore, a reduction in the size of the driving motor and power saving can be achieved.

Moreover, when the toothed belt 1 is used for driving of a carriage represented by an ink jet printer or for precision driving accompanied by a reciprocating motion of a work such as in an actuator, belt speed variation (speed variation) can be reduced, and high-precision positioning can be performed so as not to cause a printing variation or the like. In addition, even when the belt attachment tension (axial load, tension) is set to be low (even with a low tension), the toothed belt 1 exhibits dimensional stability, bendability, and durability over time. Therefore, as a driving motor attached to the pulley, a low-output and small type one can be used. Therefore, as well as a reduction in the size of the driving motor and power saving, a reduction in the size of a carriage driving apparatus represented by an ink jet printer or an actuator itself and power saving can be achieved.

(Second Example)

The toothed belt 1 having the configuration according to the second embodiment of the present invention was taken as the second Example, and evaluated.

The toothed belt 1 used in each test of the second Example was formed of a polyurethane composition (mixture A: 100 parts by mass of a urethane prepolymer having an NCO content of 4.1%, about 12 parts by mass of a amine-based curing agent (MOCA), about 20 parts by mass of a plasticizer (dialkyl phthalate), and 0.2 parts by mass of a catalyst (azelaic acid)). The tension member 3 used in Comparative Examples 2 to 6 and Examples 1 to 7 was a twisted cord into which polyarylate fiber filaments were twisted, and which had been made to have a predetermined cord diameter (see Table 8) by bundling 20 polyarylate fiber filaments (filament fineness) having a fineness of 5.5 dtex, and arranging and twisting them to form a strand (original yarn) of 110 dtex in total, and imparting thereto a predetermined number of twists. The tension member 3 used in Comparative Example 1 and Comparative Example 7 was a twisted cord into which glass fiber filaments were twisted, and which had been made to have a predetermined cord diameter by bundling about 200 glass fiber filaments (the filament diameter was 9 micrometers) and arranging and twisting them to form a strand (original yarn), performing a urethane immersion treatment thereon, and then imparting thereto a predetermined number of twists (e.g., the resultant was twisted into the number twists of 17 twists/10 cm to achieve a cord diameter of 0.17 mm; hereinafter, referred to as a glass cord). In addition, the toothed belt 1 according to each of Comparative Examples and each of Examples was produced in the above-described method.

Regarding the toothed belts 1, each test was conducted by using the toothed belts according to Examples and Comparative Examples produced by changing conditions (the length of the tooth pitch, the cord diameter, the cord type, etc.) in each test. The conditions of the configurations of the toothed belts according to Examples 1 to 7 and Comparative Examples 1 to 7 are shown in Table 8.

In addition, the test results of 1. Speed Variation Ratio Test, 2. Durable Running Test, 3. Belt Dimensional Stability Test, and 4. Belt Bendability Test are summarized and shown in Table 8. Regarding some of Examples and Comparative Examples, the test results of 1. Speed Variation Ratio Test are shown in Table 9 and Table 10, the test results of 2. Durable Running Test are shown in Table 11, the test results of 3. Belt Dimensional Stability Test are shown in Table 12, the test results of 4. Belt Bendability Test are shown in Table 13 and Table 14, and they were compared and examined in detail.

[Table 8]

Table 8

| Belt configuration | | | Comp. Ex. 1 | Comp. Ex. 2 | Ex. 1 | Comp. Ex. 3 | Ex. 2 | Ex. 3 | Ex. 4 | Ex. 5 | Ex. 6 | Ex. 7 | Comp. Ex. 4 | Comp. Ex. 5 | Comp. Ex. 6 | Comp. Ex. 7 |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| | Tooth part | Tooth pitch mm (inch) | 0.508 (1/50) | 0.400 | 0.450 | 0.508 (1/50) | 0.508 (1/50) | 0.508 (1/50) | 0.600 | 0.650 | 0.706 (1/36) | 0.706 (1/36) | 0.706 (1/36) | 0.800 | 0.850 | 0.706 (1/36) |
| | Tension member | Glass | ○ | | | | | | | | | | | | | ○ |
| | | Polyarylate | | ○ | ○ | ○ | ○ | ○ | ○ | ○ | ○ | ○ | ○ | ○ | ○ | |
| | | Cord diameter mm | 0.17 | 0.17 | 0.17 | 0.12 | 0.14 | 0.17 | 0.17 | 0.24 | 0.24 | 0.28 | 0.30 | 0.24 | 0.24 | 0.24 |
| | | Filament diameter μm | 9 | | | | | | | | | | | | | 9 |
| | | Filament fineness dtex | | 5.5 | 5.5 | 5.5 | 5.5 | 5.5 | 5.5 | 5.5 | 5.5 | 5.5 | 5.5 | 5.5 | 5.5 | |
| | Belt body | Number of teeth teeth | 1436 | 1800 | 1600 | 1436 | 1436 | 1436 | 1200 | 1110 | 1010 | 1010 | 1010 | 900 | 850 | 1010 |
| | | Pitch length mm | 729.49 | 720.00 | 720.00 | 729.49 | 729.49 | 729.49 | 720.00 | 721.50 | 712.66 | 712.66 | 712.66 | 720.00 | 722.50 | 712.66 |
| | | Width mm | 3.0 | 3.0 | 3.0 | 3.0 | 3.0 | 3.0 | 3.0 | 3.0 | 3.0 | 3.0 | 3.0 | 3.0 | 3.0 | 3.0 |
| | | Total thickness mm | 0.5 | 0.5 | 0.5 | 0.5 | 0.5 | 0.5 | 0.5 | 0.85 | 0.85 | 0.85 | 0.85 | 0.85 | 0.85 | 0.85 |
| | | Tooth height mm | 0.2 | 0.2 | 0.2 | 0.2 | 0.2 | 0.2 | 0.2 | 0.35 | 0.35 | 0.35 | 0.35 | 0.35 | 0.35 | 0.35 |
| | | Number of effective cords number | 8 | 8 | 8 | 8 | 8 | 8 | 8 | 5 | 5 | 5 | 5 | 5 | 5 | 5 |

EP 3 792 521 B1

17

(continued)

| | | | Comp. Ex. 1 | Comp. Ex. 2 | Ex. 1 | Comp. Ex. 3 | Ex. 2 | Ex. 3 | Ex. 4 | Ex. 5 | Ex. 6 | Ex. 7 | Comp. Ex. 4 | Comp. Ex. 5 | Comp. Ex. 6 | Comp. Ex. 7 |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Speed variation | Driving pulley (same in diameter) | Number of teeth teeth | 36 | 46 | 40 | 36 | 36 | 36 | 30 | 28 | 26 | 26 | 26 | 23 | 22 | 26 |
| | | Pitch circle diameter mm | 5.821 | 5.857 | 5.730 | 5.821 | 5.821 | 5.821 | 5.730 | 5.793 | 5.840 | 5.840 | 5.840 | 5.857 | 5.952 | 5.840 |
| | Speed variation ratio | During axial load of 5 N % | 0.28 A | 0.19 A | 0.21 A | A | A | 0.23 A | 0.28 A | 0.32 A | 0.37 A | A | c | 0.48 C | 0.54 C | 0.54 C |
| Durability | Number of reciprocating motions | Work weight of 350 g, axial load of 15 N Number of stops: 1,000,000 reciprocating motions | S | Tooth root cracking C | S | Tooth chipping C | Residual ratio 86.7% S | Residual ratio 89.0% S | S | S | Residual ratio 88.0% S | Residual ratio 85.5% S | Residual ratio 73.5% C | A | A | A |
| Dimensional stability | Dimensional change ratio | Inter-axis distance when 12 N % 40°C, humidity of 90%, 10 days | A | A | A | A | A | A | A | A | A | A | A | A | A | A |
| Bendability | Starting torque | N·m When 10 N, others | A | S | S | S | S | S | S | S | S | A | B | S | S | B |
| Comprehensive evaluation | | | A | C | A | C | A | A | A | A | A | A | C | C | C | C |

EP 3 792 521 B1

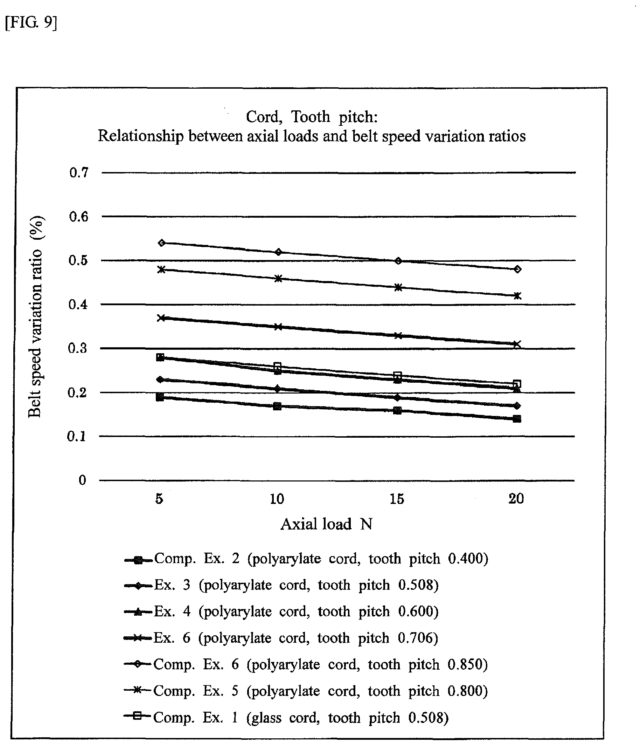

In the speed variation ratio test, as shown in Table 9, the belt speed variation ratios of the toothed belts of Comparative Example 1, Comparative Example 2, Example 3, Example 4, Example 6, Comparative Example 5, and Comparative Example 6 in the case where the axial load was set to 5 N, 10 N, 15 N, and 20 N were calculated and evaluated. As the evaluation criteria, the case where a belt speed variation ratio is 0.40% or less was evaluated as good (A), and the case of exceeding 0.40% was evaluated as poor (C). Here, the reason that the case of a belt speed variation ratio of 0.40% or less was evaluated as good as the evaluation criteria is that, when the toothed belt is used to drive a printer carriage or the like on the assumption that a low-output and small type motor is used, in the case where the belt speed variation ratio is 0.40% or less, high-precision positioning can be secured regarding driving of the printer carriage, and printing variation does not occur. A table that summarizes the results of the speed variation ratio test is shown in Table 9. FIG. 9 is a drawing graphically showing the relationship between the axial loads and the belt speed variation ratios of the toothed belts 1 according to Examples and Comparative Examples in the speed variation ratio test.

[Table 9]

Table 9

| | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 1 | 5 | Glass | 0.508 | 36 | 5.821 | 0.28 | A |
| | 10 | Glass | 0.508 | | | 0.26 | A |
| | 15 | Glass | 0.508 | | | 0.24 | A |
| | 20 | Glass | 0.508 | | | 0.22 | A |
| Comp. Ex. 2 | 5 | Polyarylate | 0.400 | 46 | 5.857 | 0.19 | A |
| | 10 | Polyarylate | 0.400 | | | 0.17 | A |
| | 15 | Polyarylate | 0.400 | | | 0.16 | A |
| | 20 | Polyarylate | 0.400 | | | 0.14 | A |
| Ex. 3 | 5 | Polyarylate | 0.508 | 36 | 5.821 | 0.23 | A |
| | 10 | Polyarylate | 0.508 | | | 0.21 | A |
| | 15 | Polyarylate | 0.508 | | | 0.19 | A |
| | 20 | Polyarylate | 0.508 | | | 0.17 | A |
| Ex. 4 | 5 | Polyarylate | 0.600 | 30 | 5.730 | 0.28 | A |
| | 10 | Polyarylate | 0.600 | | | 0.25 | A |
| | 15 | Polyarylate | 0.600 | | | 0.23 | A |
| | 20 | Polyarylate | 0.600 | | | 0.21 | A |
| Ex. 6 | 5 | Polyarylate | 0.706 | 26 | 5.840 | 0.37 | A |
| | 10 | Polyarylate | 0.706 | | | 0.35 | A |
| | 15 | Polyarylate | 0.706 | | | 0.33 | A |
| | 20 | Polyarylate | 0.706 | | | 0.31 | A |
| Comp. Ex. 5 | 5 | Polyarylate | 0.800 | 23 | 5.857 | 0.48 | C |
| | 10 | Polyarylate | 0.800 | | | 0.46 | C |
| | 15 | Polyarylate | 0.800 | | | 0.44 | C |
| | 20 | Polyarylate | 0.800 | | | 0.42 | C |

(continued)

| | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 6 | 5 | Polyarylate | 0.850 | 22 | 5.952 | 0.54 | C |
| | 10 | Polyarylate | 0.850 | | | 0.52 | C |
| | 15 | Polyarylate | 0.850 | | | 0.5 | C |
| | 20 | Polyarylate | 0.850 | | | 0.48 | C |

According to the speed variation ratio test, from the test results of any of Comparative Examples and Examples (regardless of the type of the tension member 3 and tooth pitch), the belt speed variation ratio increased as the axial load during the running of the toothed belt 1 decreased (see FIG. 9).

As shown in Table 9 and FIG. 9, regarding Comparative Example 1 and Example 3, a tooth pitch of 0.508 mm and a cord diameter of 0.17 mm were applied as the same condition, and the type of the tension member 3 was set to a glass cord (Comparative Example 1) and to a polyarylate cord (Example 3). When Comparative Example 1 is compared with Example 3, it was found that the belt speed variation ratio of the polyarylate cord (Example 3) was lower than that of the glass cord (Comparative Example 1) at any axial load (5 N, 10 N, 15 N, and 20 N). Therefore, even in a low-tension region (5 to 15 N), the belt speed variation ratio can be suppressed in the case where the polyarylate cord is employed as compared to the case where the glass cord is employed. It is considered that this is because the toothed belt 1 that employs the polyarylate cord has better bendability (flexibility) than that of the toothed belt 1 that employs the glass cord as can be seen from the results of the belt bendability test, which will be described later.

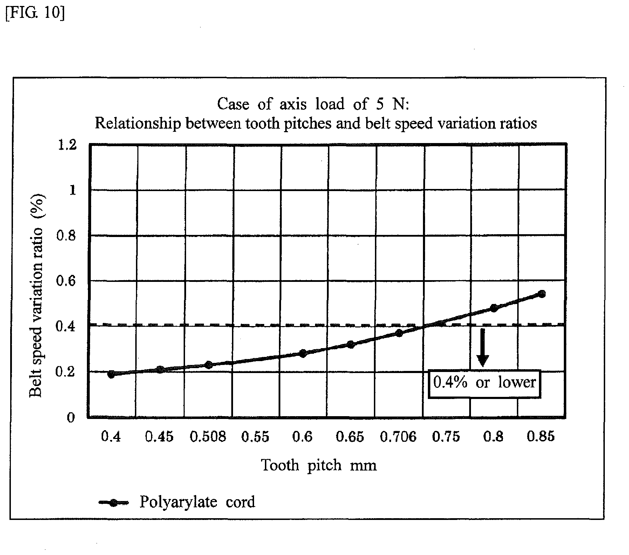

In addition, in the speed variation ratio test, as shown in Table 8, the belt speed variation ratios of the toothed belts 1 of Comparative Examples 1 to 7 and Examples 1 to 7 in the case where the axial load was set to 5 N were calculated and evaluated. Table 10 summarizes and shows the results of calculation and evaluation of the belt speed variation ratios of the toothed belts 1 employing the polyarylate cord of Comparative Example 2, Example 1, Example 3, Example 4, Example 5, Example 6, Comparative Example 5, and Comparative Example 6 in the case where the axial load was set to 5 N. FIG. 10 is a drawing graphically showing the relationship between the tooth pitches and the belt speed variation ratios of the toothed belts 1 employing the polyarylate cord according to Examples and Comparative Examples in Table 10.

[Table 10]

Table 10

| | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 2 | 5 | Polyarylate cord | 0.400 | 46 | 5.857 | 0.19 | A |
| Ex. 1 | 5 | Polyarylate cord | 0.450 | 40 | 5.730 | 0.21 | A |
| Ex. 3 | 5 | Polyarylate cord | 0.508 | 36 | 5.821 | 0.23 | A |
| Ex. 4 | 5 | Polyarylate cord | 0.600 | 30 | 5.730 | 0.28 | A |
| Ex. 5 | 5 | Polyarylate cord | 0.650 | 28 | 5.793 | 0.32 | A |
| Ex. 6 | 5 | Polyarylate cord | 0.706 | 26 | 5.840 | 0.37 | A |

(continued)

| | Axial load N | Cord material | Tooth pitch mm | Number of teeth of driving pulley teeth | Same pitch circle diameter mm | Speed variation ratio % | Speed variation evaluation |
|---|---|---|---|---|---|---|---|
| Comp. Ex. 5 | 5 | Polyarylate cord | 0.800 | 23 | 5.857 | 0.48 | C |
| Comp. Ex. 6 | 5 | Polyarylate cord | 0.850 | 22 | 5.952 | 0.54 | C |

According to the speed variation ratio test of Table 10 and FIG. 10, the belt speed variation ratio decreased as the tooth pitch decreased. In addition, in the cases where the tooth pitch was set to 0.400 mm (Comparative Example 2), 0.450 (Example 1), 0.508 mm (Example 3), 0.600 mm (Example 4), 0.650 mm (Example 5), and 0.706 mm (Example 6), the belt speed variation ratio in the case where the axial load was set to 5 N was 0.40% or less and was evaluated as good (A).

In the speed variation ratio test, by setting the tooth pitch to at least a range of from 0.400 mm to 0.710 mm (see FIG. 10), the belt speed variation ratio was 0.40% or less and was evaluated as good (A) even in the case where the axial load was set to from 5 N to 20 N.

Here, in the case where the axial load is lower than 5 N, the tension of the belt is too low to allow the toothed belt 1 to be suspended between the pulleys, and synchronous power transmission performance between the pulleys cannot be sufficiently exhibited.

On the other hand, 15 N is regarded as the maximum value of the axial load with which the low-output and small type motor can be employed to drive an apparatus. In the case where the axial load is higher than 15 N, an excessive load is exerted on the shaft of the low-output and small type motor, and the torque performance of the motor cannot be sufficiently exhibited.

Therefore, since the toothed belts 1 of Examples were achieved the belt speed variation ratio evaluated as good (A) even in the cases where the axial load was set to from 5 N to 15 N, there is a merit that as a driving motor attached to the driving pulley 5 can be easily employed a low-output and small type one, for example.

In the case where the tooth pitch was set to 0.400 mm (Comparative Example 2), although the belt speed variation ratio was evaluated as good (A), in the durable running test, which will be described later, tooth root cracking had occurred, resulting in a level of poor (C) in the comprehensive evaluation.

In the durable running test, as shown in Table 8, the test was conducted on the toothed belts of Comparative Examples 1 to 7 and Examples 1 to 7. Table 11 shows the test results of the durable running test conducted on the toothed belts 1 of Comparative Example 3 (cord diameter 0.12 mm), Example 2 (cord diameter 0.14 mm), Example 3 (cord diameter 0.17 mm), Example 6 (cord diameter 0.24 mm), Example 7 (cord diameter 0.28 mm), and Comparative Example 4 (cord diameter 0.30 mm).

[Table 11]

Table 11

| | | Comp. Ex. 3 | Ex. 2 | Ex. 3 | Ex. 6 | Ex. 7 | Comp. Ex. 4 |
|---|---|---|---|---|---|---|---|
| Belt & driving pulley | Tooth pitch mm | 0.508 | 0.508 | 0.508 | 0.706 | 0.706 | 0.706 |
| Tension member | Glass | | | | | | |
| | Polyarylate | ○ | ○ | ○ | ○ | ○ | ○ |
| | Cord diameter mm | 0.12 | 0.14 | 0.17 | 0.24 | 0.28 | 0.30 |

(continued)

| | | Comp. Ex. 3 | Ex. 2 | Ex. 3 | Ex. 6 | Ex. 7 | Comp. Ex. 4 |
|---|---|---|---|---|---|---|---|
| Driving pulley | Number of teeth teeth | 36 | 36 | 36 | 26 | 26 | 26 |
| | Pitch circle diameter mm | 5.821 | 5.821 | 5.821 | 5.840 | 5.840 | 5.840 |
| Result | Number of durable operations 10,000 times | 80-90 | 100 | 100 | 100 | 100 | 100 |
| | Evaluation | Tooth chipping C | Residual ratio 86.7% S | Residual ratio 89.0% S | Residual ratio 88.0% S | Residual ratio 85.5% S | Residual ratio 73.5% C |

According to the durable running test, Example 2 (cord diameter 0.14 mm), Example 3 (cord diameter 0.17 mm), Example 6 (cord diameter 0.24 mm), and Example 7 (cord diameter 0.28 mm) were evaluated as excellent (S). On the other hand, in Comparative Example 3 (cord diameter 0.12 mm), the tooth part 2 of the toothed belt 1 was chipped, resulting in a level of deteriorated durability (C). In Comparative Example 4 (cord diameter 0.30 mm), the residual ratio of the belt tensile strength of the toothed belt 1 was 73.5%, and thus the bending fatigue of the tension member increased, resulting in a level of poor (C) in the evaluation.

From the above description, it is found that when the cord diameter of the polyarylate cord is at least in a range of from 0.14 mm to 0.28 mm, durability can be secured even in the case where the tooth pitch is set relatively small.

As shown in Table 8, in the durable running test of the toothed belt 1 of Comparative Example 2 (tooth pitch 0.400 mm), tooth root cracking had occurred, resulting in a level of deteriorated durability (C). It is assumed that this is because when the tooth pitch became too small, rigidity necessary for each tooth part against an engagement load between the teeth of the pulley and the teeth of the toothed belt could not be secured.

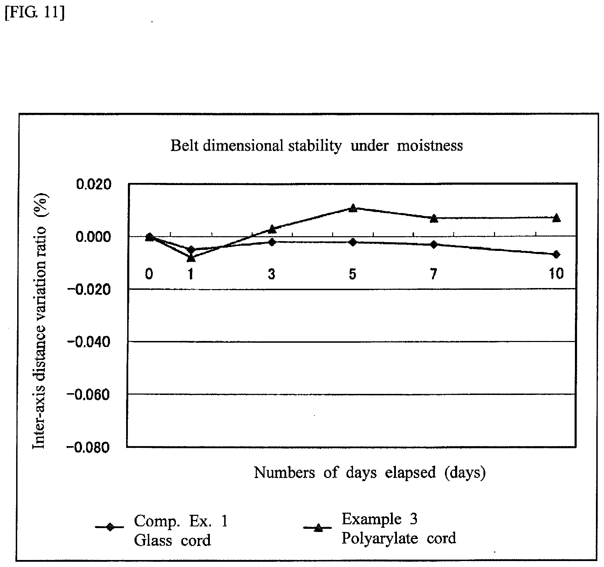

Table 12 shows the results of the belt dimensional stability test of the toothed belt 1 according to Comparative Example 1 (glass cord) and the toothed belt 1 according to Example 3 (polyarylate cord). In addition, FIG. 11 shows the relationship between the number of days elapsed and the inter-axis distance variation ratio in the toothed belts 1 according to Comparative Example 1 and Example 3.

[Table 12]

Table 12

| | Cord material | Cord diameter mm | Number of days days | Inter-axis distance variation ratio % | Evaluation |
|---|---|---|---|---|---|
| Comparative Example 1 Glass cord | Glass | 0.170 | 0 | 0 | A |
| | | | 1 | -0.005 | |
| | | | 2 | | |
| | | | 3 | -0.002 | |
| | | | 4 | | |
| | | | 5 | -0.002 | |
| | | | 6 | | |
| | | | 7 | -0.003 | |
| | | | 8 | | |
| | | | 9 | | |
| | | | 10 | -0.007 | |
| Example 3 Polyarylate cord | Polyarylate | 0.170 | 0 | 0 | A |
| | | | 1 | -0.008 | |
| | | | 2 | | |
| | | | 3 | 0.003 | |
| | | | 4 | | |
| | | | 5 | 0.011 | |
| | | | 6 | | |
| | | | 7 | 0.007 | |
| | | | 8 | | |
| | | | 9 | | |
| | | | 10 | 0.007 | |

In the belt dimensional stability test, in any of the toothed belts 1 of Comparative Examples 1 to 7 and Examples 1 to 7, the inter-axis distance variation ratio (absolute value) for the number of days elapsed of 10 days was 0.02% or lower and was evaluated as good (A). Accordingly, it is found that even in the case where the polyarylate cord having a relatively small cord diameter of from 0.14 to 0.28 mm was employed by the toothed belt 1, the inter-axis distance variation ratio had rarely varied, and thus the dimensional stability of the toothed belt 1 was sufficiently secured. In addition, from Table 12 and FIG. 11, it is found that even in the case where the polyarylate cord was used as the tension member 3, dimensional stability was secured to the same degree as that in the case where the glass cord was used as the tension member 3.

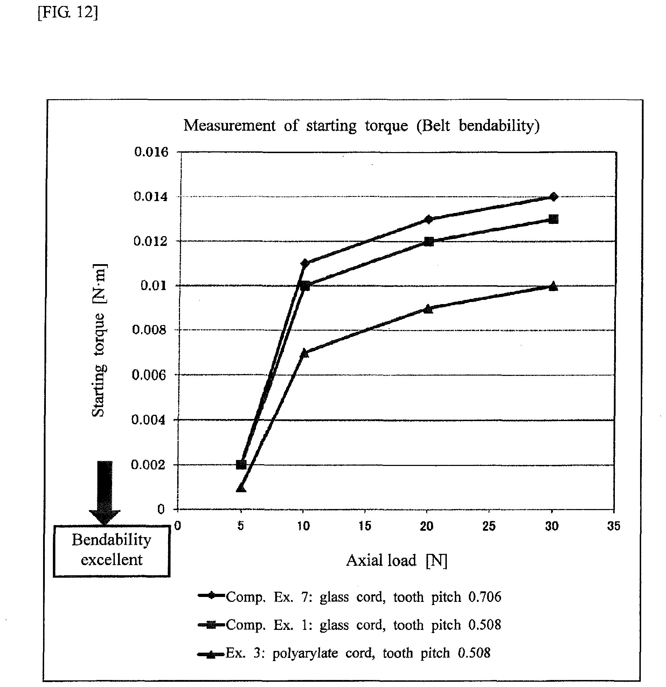

Table 13 shows the results of measurement of starting torques in the cases where the axial load was set to 5 N, 10 N, 20 N, and 30 N regarding the toothed belts 1 according to Comparative Example 7, Comparative Example 1, and Example 3. Table 14 shows a table that summarizes belt configurations, starting torques in the case where the axial load was set to 10 N, and evaluations regarding the toothed belts 1 according to Comparative Example 7, Comparative Example 1, and Example 3. FIG. 12 is a drawing graphically showing the relationship between the axial loads and the starting torques regarding the toothed belts according to Comparative Example 7, Comparative Example 1, and Example 3.

[Table 13]

Table 13

| Axial load [N] | Comparative Example 7 Glass cord Tooth pitch 0.706 | Comparative Example 1 Glass cord Tooth pitch 0.508 | Example 3 Polyarylate cord Tooth pitch 0.508 |
|---|---|---|---|
| 5 | 0.002 | 0.002 | 0.001 |
| 10 | 0.011 | 0.010 | 0.007 |
| 20 | 0.013 | 0.012 | 0.009 |
| 30 | 0.014 | 0.013 | 0.010 |

[Table 14]

Table 14

| | | Comparative Example 7 | Comparative Example 1 | Example 3 |
|---|---|---|---|---|
| Belt & driving pulley | Tooth pitch mm | 0.706 | 0.508 | 0.508 |
| Tension member | Glass | ○ | ○ | |
| | Polyarylate | | | ○ |
| | Cord diameter mm | 0.24 | 0.17 | 0.17 |
| Driving pulley | Number of teeth teeth | 26 | 36 | 36 |
| | Pitch circle diameter mm | 5.840 | 5.821 | 5.821 |
| Result | Starting torque during axial load of 10N N·m | 0.011 | 0.010 | 0.007 |
| | Evaluation (relative evaluation) | B | A | S |

As shown in Table 13, Table 14 and FIG. 12, in the comparison of the glass cords between Comparative Example 7 and Comparative Example 1, the tension member 3 having a smaller diameter exhibited lower starting torque even in a low-tension region (5 to 15N). This means that the tension member 3 having a small diameter causes the belt to have high bendability and flexibility.

When Comparative Example 1 (glass cord) is compared with Example 3 (polyarylate cord), it is found that the toothed belt 1 using the polyarylate cord caused a significantly lower starting torque than that of the toothed belt 1 using the glass cord. Here, it is found that in the case where the starting torque of the toothed belt 1 is low, the toothed belt 1 has high bendability, that is, the toothed belt 1 using the polyarylate cord that causes a low starting torque, has excellent power transmission performance during start-up. Therefore, it is found that as compared to the toothed belt 1 using the glass cord as the tension member 3, the toothed belt 1 using the polyarylate cord as the tension member 3 causes high bendability and flexibility of the toothed belt 1 and excellent in power transmission performance during start-up.

In addition, in the case where the bendability of the toothed belt 1 is high, even when the axial load is set to from 5 N to 15 N (low tension), the starting torque tends to decrease.

Therefore, a belt with excellent bendability and a low starting torque causes easy start-up (of a driving motor attached to the shaft of the driving pulley 5), has excellent power transmission performance during starting-up, and contributes to, as well as the employment of a small and low-output driving motor, reductions in the size and weight of the driving motor and power saving.

(Comprehensive Evaluation)

According to the results of 1. Speed Variation Ratio Test, 2. Durable Running Test, 3. Belt Dimensional Stability Test, and 4. Belt Bendability Test, when the conditions of the toothed belt 1 which was evaluated as good (A) in the evaluation of belt speed variation ratio in the speed variation ratio test, evaluated as excellent (S) in the evaluation in the durable running test, evaluated as good (A) in the result of the belt dimensional stability test, and evaluated as good (A) in the belt bendability test are summarized, it can be found that the pitch between a tooth part and another tooth part is from 0.45 to 0.71 mm, and that regarding the tension member 3, as for the twisted cord constituted by polyarylate fiber filaments, the cord diameter of the tension member 3 is from 0.14 to 0.28 mm.

In the above-described configuration, since the pitch between a tooth part 2 and another tooth part 2 is set to from 0.45 to 0.71 mm, the number of teeth of the toothed belt 1 can be increased as compared to one in which the pitch between the tooth parts 2 is greater than 0.71 mm. Accordingly, when the toothed belt 1 is wound around a pulley having a small diameter, a polygonal shape generated due to the engagement between the tooth parts 2 of the toothed belt 1 and the teeth of the pulley can be caused to more approach a circular shape. Accordingly, up-and-down movement of the running line (belt pitch line) of the toothed belt 1 when the toothed belt 1 runs between the pulleys is suppressed, and belt speed variation (speed variation) during the running of the toothed belt 1 can be reduced.

In addition, by using as the tension member 3 a twisted cord which is constituted by polyarylate fiber filaments and has a cord diameter of from 0.14 to 0.28 mm, the bendability of the toothed belt can be increased as compared to one having a cord diameter of greater than 0.28 mm. Accordingly, the toothed belt 1 can be wound around pulleys having smaller diameters with low tension.

Furthermore, since the cord diameter of the tension member 3 is set small, the back side 4 of the toothed belt 1 can be reduced in thickness. This also can increase the bendability of the toothed belt 1.

In addition, by using the polyarylate fiber filaments in the tension member 3, the long-term and environmental dimensional stability of the toothed belt 1 can be ensured.

In addition, by enhancing the dimensional stability and bendability of the toothed belt 1, even in the case where the toothed belt 1 is wound around pulleys having small diameters with low tension, belt speed variation during the running of the toothed belt 1 can be reduced.

Moreover, by enhancing the dimensional stability and bendability of the toothed belt 1, the starting torque (of a driving motor attached to the shaft of the driving pulley) can be reduced, and power transmission performance during start-up can be enhanced.

In addition, since the axial load when the toothed belt 1 is wound around pulleys with a belt tension is set to as relatively low as from 5 to 15 N, a load on the shaft of the pulley can be reduced. As the load on the shaft of the pulley can be reduced, for example, as a driving motor attached to the pulley, a low-output and small type one can be used. Therefore, a reduction in the size of the driving motor and power saving can be achieved.

Moreover, when the toothed belt 1 is used for driving of a carriage represented by an ink jet printer or for precision driving accompanied by a reciprocating motion of a work such as in an actuator, belt speed variation (speed variation) can be reduced, and high-precision positioning can be performed so as not to cause a printing variation or the like. In addition, even when the belt attachment tension (axial load, tension) is set to be low (even with a low tension), the toothed belt 1 exhibits dimensional stability, bendability, and durability over time. Therefore, as a driving motor attached to the pulley, a low-output and small type one can be used. Therefore, as well as a reduction in the size of the driving motor and power saving, a reduction in the size of a carriage driving apparatus represented by an ink jet printer or an actuator itself and power saving can be achieved.

While the present invention has been described in detail with reference to specific embodiments, it should be understood by those skilled in the art that various modifications and changes can be made therein without departing from the scope of the present invention.

DESCRIPTION OF REFERENCE NUMERALS AND SIGNS

1   Toothed belt
2   Tooth part
3   Tension member
4   Back side
5   Driving pulley
6   Driven pulley

**Claims**

1. A toothed belt (1) comprising a back side (4), tooth parts (2), and a tension member (3) embedded in the back side (4), wherein

the back side (4) and the tooth part (2) comprise a urethane resin composition,
the tension member (3) is a twisted cord constituted by polyarylate fiber filaments, and wherein
the tooth parts have a pitch therebetween of from 0.45 to 0.71 mm, and
the cord has a cord diameter of from 0.14 to 0.28 mm.

2. The toothed belt (1) according to Claim 1, which is used under a condition that an axial load, which is a load exerted on a shaft of a pulley when the toothed belt is wound around the pulley with a belt tension, becomes from 5 to 15 N.

**Patentansprüche**

1. Zahnriemen (1), umfassend eine Rückseite (4), Zahnteile (2) und ein Spannelement (3), das in der Rückseite (4) eingebettet ist, wobei

   die Rückseite (4) und der Zahnteil (2) eine Urethanharzzusammensetzung umfassen,
   das Spannelement (3) eine verdrillte Schnur ist, die von Polyarylatfaserfilamenten gebildet wird, und wobei
   die Zahnteile (2) dazwischen eine Teilung von 0,45 bis 0,71 mm aufweisen, und
   die Schnur einen Schnurdurchmesser von 0,14 bis 0,28 mm aufweist.

2. Zahnriemen (1) nach Anspruch 1, der unter einer Bedingung verwendet wird, dass sich eine Axialbelastung, die eine Belastung ist, die auf eine Welle einer Riemenscheibe ausgeübt wird, wenn der Zahnriemen um die Riemenscheibe mit einer Riemenspannung gewickelt ist, von 5 bis 15 N einstellt.

**Revendications**

1. Courroie crantée (1) comprenant un côté arrière (4), des parties formant dent (2) et un élément de tension (3) logé dans le côté arrière (4), dans laquelle

   le côté arrière (4) et la partie formant dent (2) comprennent une composition de résine d'uréthane,
   l'élément de tension (3) est un câble torsadé constitué de filaments de fibre de polyarylate, et dans laquelle
   les parties formant dent présentent un pas entre elles de 0,45 à 0,71 mm, et
   le câble présente un diamètre de câble de 0,14 à 0,28 mm.

2. Courroie crantée (1) selon la revendication 1, qui est utilisée dans une condition où une charge axiale, qui est une charge exercée sur un axe d'une poulie lorsque la courroie crantée est enroulée autour de la poulie avec une tension de courroie, prend une valeur de 5 à 15 N.

[FIG. 1]

[FIG. 2]

(A)

Pitch line  4  3  1

Width

Cord diameter

2  2  2  2

(B)

Pitch line

Total thickness

Tooth height

Tooth pitch

[FIG. 3]

Laser Doppler meter

[FIG. 4]

Work (weight)

[FIG. 5]

Tooth pitch: Relationship between axial loads and belt speed variation ratios

Belt speed variation ratio (%)

Axial load N

━■━Comp. Ex. 1 (tooth pitch 0.400)  ━◆━Ex. 4 (tooth pitch 0.508)
━▲━Ex. 6 (tooth pitch 0.600)  ━✕━Comp. Ex. 7 (tooth pitch 0.706)
━✳━Comp. Ex. 8 (tooth pitch 0.800)  ━◇━Comp. Ex. 9 (tooth pitch 0.850)

[FIG. 6]

Case of shaft load of 5 N:
Relationship between tooth pitches and belt speed variation ratios

[FIG. 7]

Belt dimensional stability under moistness

[FIG. 8]

Measurement of starting torque (Belt bendability)

[FIG. 9]

Cord, Tooth pitch:
Relationship between axial loads and belt speed variation ratios

—■—Comp. Ex. 2 (polyarylate cord, tooth pitch 0.400)

—◆—Ex. 3 (polyarylate cord, tooth pitch 0.508)

—▲—Ex. 4 (polyarylate cord, tooth pitch 0.600)

—✕—Ex. 6 (polyarylate cord, tooth pitch 0.706)

—◇—Comp. Ex. 6 (polyarylate cord, tooth pitch 0.850)

—✳—Comp. Ex. 5 (polyarylate cord, tooth pitch 0.800)

—▱—Comp. Ex. 1 (glass cord, tooth pitch 0.508)

[FIG. 10]

Case of axis load of 5 N:
Relationship between tooth pitches and belt speed variation ratios

[FIG. 11]

[FIG. 12]

Measurement of starting torque (Belt bendability)

Bendability
excellent

→ Comp. Ex. 7: glass cord, tooth pitch 0.706

→ Comp. Ex. 1: glass cord, tooth pitch 0.508

→ Ex. 3: polyarylate cord, tooth pitch 0.508

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011133022 A
- JP 2002098202 A
- JP 2002349636 A